# EUROPÄISCHE PATENTSCHRIFT

(11) **EP 2 006 462 B1**
(45) Veröffentlichungstag und Bekanntmachung des Hinweises auf die Patenterteilung: **22.09.2010**
(21) Anmeldenummer: 08005639.3
(22) Anmeldetag: 26.03.2008
(51) Int. Cl.: E04B 1/86, E04B 1/90, G10K 11/168, E04C 2/16

(54) **Akustik-Mehrschichtplatte**
Acoustic multi-layer board
Plaque multicouche acoustique

(30) Priorität: 20.06.2007 AT 3852007
(43) Veröffentlichungstag der Anmeldung: 24.12.2008
(73) Patentinhaber: Knauf Insulation GmbH, 9586 Fürnitz (AT)
(72) Erfinder: Neuherz, Willibald, Dr., 9702 Ferndorf (AT); Königs, Stefan, 9523 Villach-Landskron (AT)
(74) Vertreter: Müller-Boré & Partner Patentanwälte

(56) Entgegenhaltungen:
- EP-B- 1 371 619
- DE-A1-102005 019 433
- GB-A- 568 696
- US-A1- 2004 185 226

## Beschreibung

Die Erfindung betrifft eine Akustik-Mehrschichtplatte auf Basis von Holzwolle-Spänen, die untereinander über ein anorganisches Bindemittel unter Bildung einer offenporigen Struktur verbunden sind.

Solche Akustik-Mehrschichtplatten haben unter anderem folgende Anwendungsbereiche: Sie dienen der akustisch wirksamen Verkleidung von Wänden und Decken für den Innenausbau von Büro-, Verwaltungs-, und Wohnbauten, Kindergärten, Schulen, Schwimmbädern, Restaurants, etc.

Ein entsprechendes Mehrschichtelement weist in der Regel eine Rohdichte meist bis 350 kg/m³, gemäß DIN1101 bis mindestens 570kg/m³ auf. Holzwolle-Leichtbauelemente der vorgenannten Art sind unter dem Handelsnamen "Heraklith" seit langem bekannt. Die Holzwolle-Späne (Holzwolle-Fasern) weisen üblicherweise eine Länge von mehr als 8 cm, eine Breite von 1 bis 6 mm und eine Dicke von 0,2 bis 0,5 mm auf. Die einzelnen Holzfasern zeichnen sich durch eine erhebliche offene Porosität (sogenannte Zellen) aus. Die in unregelmäßiger Geometrie vorliegenden, spröden Holzwolle-Späne liegen innerhalb des Leichtbauelementes in Form eines offenporigen, dreidimensionalen Gerüstes unregelmäßig verteilt vor und sind zumindest abschnittsweise untereinander über ein anorganisches Bindemittel, beispielsweise auf Basis Mg(OH)₂ verbunden.

Die WO 2004/065317 A2 beschreibt eine solche Bauplatte, die durch verschiedene Zusätze die Kriterien der Brandschutzklasse A2 gemäß DIN 4102 und der DIN EN 13168 (Brandverhalten nach DIN EN 13501-1: A2 S₁ d0) erfüllt.

GB-A-568 696 beschreibt eine schallabsorbierende Bauplatte mit einem zementgebundenen Holzwollekern, der beidseitig mit einer perforierten Metallfolie oder einem Metallnetz abgedeckt ist, wobei das Metallnetz an einem Gerüst angeschweißt oder andersweitig befestigt ist.

Bekannte unbeschichtete Holzwolleelemente weisen gute Schallabsorptionsgrade auf. Der Erfindung liegt die Aufgabe zu Grunde, eine Akustik-Mehrschichtplatte anzubieten, die hinsichtlich ihrer akustischen Eigenschaften im Vergleich zu den vorgenannten Elementen verbesserte Eigenschaften ergibt.

Dieses Ziel wird durch einen mindestens dreischichtigen Aufbau einer Akustik-Bauplattegemäß Anspruch 1 erreicht.

Eine qualitative Verbesserung des Schallabsorptionsgrades wird durch eine Deckschicht auf der Holzwolle-Schicht erreicht, wobei die Deckschicht die im Anspruch 1 genannte spezifische Perforation aufweist.

Der Begriff Grundfläche beschreibt eine maximale Oberfläche der Deckschicht auf der der inneren Schicht zugewandten Seite oder auf der freien Oberfläche.

Im Allgemeinen kann ein dreischichtige Aufbau dadurch hergestellt werden, indem die innere Schicht auf ihren beiden Hauptoberflächen mit einer perforierten Deckschicht ausgebildet ist.

Eine solche Akustik-Mehrschichtplatte lässt sich hervorragend in eine sogenannte abgehängte Decke integrieren, wie sie zum Beispiel in der DE 20 2004 005 298 U1 beschrieben ist.

In ihrer allgemeinsten Ausführungsform umfasst die Erfindung Akustik-Platten, deren innere Holzwolle-Schicht nur auf einer Hauptoberfläche mit einer perforierten Deckschicht ausgebildet ist, während auf der anderen Hauptoberfläche eine Mineralfaserauflage, eine Gipskartonplatte oder ein Glasvlies die dritte Schicht bildet. Eine solche Akustik-Platte, die nur auf einer Seite perforiert ist, kann zum Beispiel über ihre nicht perforierte Oberfläche direkt an einer Decke oder Wand angeklebt werden.

Im Übrigen beruht die schallabsorbierende Wirkung auf der Kombination perforierter Deckschichten mit Holzwolle-Absorptionselementen. Durch die Perforationsöffnungen dringen Schallwellen in den Holzwolle-Kern ein, wo sie absorbiert werden.

Die Deckschicht kann als vorgefertigtes Halbzeug, beispielsweise als Metallfolie, Kunststoffplatte oder Holzfurnier auf die innere Schicht aufgebracht, insbesondere aufgeklebt werden. Dabei kann das vorgefertigte Halbzeug bereits die Perforation aufweisen. Die Perforation kann aber auch nachträglich eingebracht werden, beispielsweise durch Stanzungen. Dieses Herstellungsverfahren ist einfach und preiswert.

Alternativ kann die Deckschicht aus einer ausgehärteten monolithischen Masse bestehen, beispielsweise auf Basis Kunstharz, Kunststoff oder Metall. Im letztgenannten Fall kann die Metall-Deckschicht beispielsweise aufgedampft werden. Die Perforationen werden anschließend ausgebildet.

Eine Deckschicht aus einer der genannten ausgehärteten monolithischen Massen weist üblicherweise eine geringe Schichtstärke unter 1 mm auf. Plattenförmige oder folienförmige Deckschichten können eine Materialstärke auch über 1 mm aufweisen. Insgesamt sollte die Deckschicht eine Schichtstärke im Bereich 0,2 bis 1,5 mm aufweisen.

Die Perforationsöffnungen wirken dann besonders schallsabsorbierend, wenn ihre maximale Öffnungsweite zwischen 0,2 und 1,5 mm liegt. Die konkrete Öffnungsweise muss anhand der lokalen Gegebenheiten ermittelt werden. Im Regelfall genügen Perforationsöffnungen mit einer Öffnungsweite zwischen 0,5 und 1,0 mm. Die Perforationsöffnungen können grundsätzlich jeden beliebigen Querschnitt aufweisen. Beispielsweise können die Perforationsöffnungen rund, dreieckig oder rechteckig sein. Die hervorragenden schalltechnischen Eigenschaften lassen sich durch nachfolgende Maßnahme auch in Hinblick auf das Brandverhalten kombinieren. In diesem Zusammenhang schlägt die Erfindung vor, den Holzwolle-Kern, also die innere Schicht, so auszubilden, dass sie die Anforderungen der Brandschutzklasse A2 gemäß DIN 4102 (ISO1182) und DIN EN 13168 (Brandverhalten nach DIN EN 13501-1: A2 S₁ d0) erfüllt. Die Norm unterteilt derartige Bauteile in A - nicht-brennbare Baustoffe - mit den Unterklassen A1 - Stoffe, die überhaupt nicht brennbar sind - und A2 - Stoffe, welche nur geringfügig brennbar sind -, den Brand aber nicht weiter aufrechterhalten.

Auch in Kombination mit Deckschichten mit der vorgenannten Art ergibt sich im Ergebnis eine Akustik-Platte, die mindestens der Brandschutzklasse B genügt.

Die Verbesserung der brandtechnischen Eigenschaften kann auf unterschiedliche Weise erzielt werden. Eine Möglichkeit besteht darin, die Holzwolle-Schicht mit einem Brandschutzmittel zu imprägnieren, beispielsweise auf Basis Ammoniumphosphat, Ammoniumpolyphosphat, Alkalicarbonat, Erdalkalicarbonat, Alkalisulfat, Erdalkalisulfat, Harnstoff, Dipentaerythydrit und/oder Mischungen daraus. Die Menge an trockener Wirksubstanz des Flammschutzmittels beträgt 7 bis 40 Masse-%, bezogen auf die trockene Masse der Schicht. Die Kernschicht kann weitere Zusatzmittel, wie Alkali- oder Erdalkaliphosphate wie Natriumhexametaphosphat enthalten. Eine andere Möglichkeit der Verbesserung der brandtechnischen Eigenschaften besteht darin, in die offenporige Struktur der Holzwolle-Kernschicht einen Intumeszenzbildner zu integrieren, beispielsweise in Mengen zwischen 1 und 25 Gew.-%, bezogen auf die Masse des anorganischen Bindemittels der inneren Schicht, wobei der Intumeszenzbildner überwiegend im und/oder auf dem Bindemittel verteilt angeordnet wird.

Die vorstehend genannten brandtechnischen Optimierungen sind als solche bekannt. Insoweit wird auf die Offenbarung der WO 2004/065317 A2 beziehungsweise EP 1 371 619 B1 Bezug genommen.

Die Gesamtdicke einer Akustik-Bauplatte, senkrecht zu ihren Hauptoberflächen, liegt regelmäßig zwischen 25 und 60 mm, wenngleich geringere oder größere Dicken möglich sind. Die Plattengröße selbst bewegt sich vorzugsweise in üblichen Rastermaßen, beispielsweise 600 · 600 mm, 625 · 625 mm, 1200 · 600 mm oder 1250 · 625 mm.

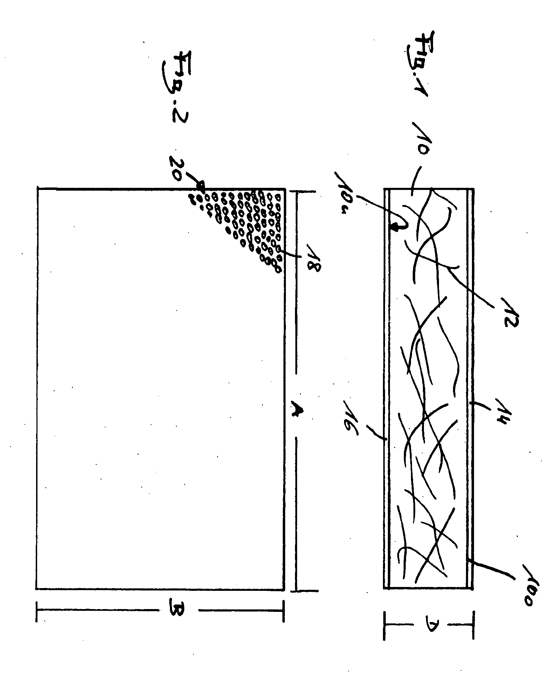

Nachstehend wird ein Referenz-beispiel erläutert. Figur 1 zeigt eine Seitenansicht einer Akustik-Mehrschichtplatte mit einer inneren Schicht 10 aus Holzwolle-Spänen 12 die über ein (nicht dargestelltes) magnesitisches Bindemittel miteinander verbunden sind. Die innere Schicht 10 weist eine offene Struktur auf. Die Freiräume zwischen den Holzwolle-Spänen 12 können beispielsweise 50 bis 80 Vol.-%,aber auch mehr, betragen. Jede einzelne Holzfaser 12 weist ebenfalls eine erhebliche offene (Mikro)Porosität (sogenannte Zellen) auf.

In das Bindemittel ist ein Flammschutzmittel auf Basis Ammoniumphosphat integriert. Der Anteil der trockenen Wirksubstanz des Flammschutzmittels beträgt, bezogen auf den trockenen Masseanteil der inneren Schicht 10, 15 Masse-%. Damit erfüllt die innere Schicht die A2 Klassifizierungskriterien.

Die innere Schicht 10 weist eine obere Hauptoberfläche 10o und eine untere Hauptoberfläche 10u auf. Die Grundfläche beider Hauptoberfläche 10o, 10u ist ident und beträgt A x B (Figur 2).

Auf die obere Hauptoberfläche 10o ist eine 0,8 mm starke Metallfolie (Metallplatte) 14 aufgeklebt. Die untere Hauptoberfläche 10u ist mit einem 0,5 mm starken Holzfurnier beschichtet (verklebt), welches mit dem Bezugszeichen 16 charakterisiert ist.

Figur 2 zeigte eine Aufsicht auf die Akustik-Platte nach Figur 1 und damit auf die Metallfolie 14, die die obere Deckschicht bildet, während das Holzfurnier 16 die untere Deckschicht beschreibt.

Schematisch ist im oberen linken Teil der Figur eine Perforierung der oberen Deckschicht 14 angedeutet, mit Perforationsöffnungen 18, die jeweils einen kreisrunden Querschnitt aufweisen mit einer Öffnungsweite von 0,4 mm, wobei circa 15 Öffnungen je cm² angeordnet sind.

Aus Figur 2 ist schematisch zu erkennen, dass im Randbereich der Deckschicht 14 keine Perforationen angeordnet sind. Dieser perforationsfreie umlaufende Abschnitt ist in Figur 2 mit 20 symbolisiert. Es wurde hier auf Perforationen verzichtet, weil eine Akustik-Platte der genannten Art anschließend in eine abgehängte Decke integriert werden soll, wo die einzelne Platte mit ihrem Randbereich auf entsprechenden Tragschienen aufliegt.

Das anhand der oberen Deckschicht 14 dargestellte Perforationsmuster gilt auch für die untere Deckschicht 16 aus Holz.

Die dargestellte Platte hat eine Gesamtdicke D von 26 mm. Sie besitzt folgende physikalische Kennwerte:
1. Brandverhalten: nach DIN EN 13501-1: B-S₁ d₀
2. Biegefestigkeit gemäß IN 12089: ≥ 2200 kPa
3. Schallabsorptionsgrad gemäß ÖNORM EN 20354: α_{w}= 0,5-0,8 (abhängig vom Systemaufbau)

## Patentansprüche

1. Akustik-Mehrschichtplatte mit folgendem, mindestens dreischichtigen Aufbau, umfassend:
1.1 eine innere Schicht (10) auf Basis unregelmäßig verteilter Holzwolle-Späne (12), die mit einem anorganischen Bindemittel zumindest abschnittweise verbunden sind,
1.2 eine perforierte Deckschicht (14, 16) auf einer Hauptoberfläche (100, 10u) der inneren Schicht (10), wobei
die Deckschicht (14, 16) in Form eines vorgefertigten Halbzeugs vorliegt, welches auf eine korrespondierende Hauptoberfläche (10o, 10u) der inneren Schicht (10) aufgeklebt ist, oder wobei
die Deckschicht (14, 16) aus einer ausgehärteten monolithischen Masse besteht, wobei
1.3 die Deckschicht (14, 16) auf mindestens 4/5 ihrer Grundfläche mit einer Perforation (18) ausgebildet ist, mit 5 bis 25 Perforationsöffnungen je cm² Grundfläche, und
1.4 eine Mineralfaserauflage, eine Gipskartonplatte oder ein Glasvlies, welche auf der anderen Hauptoberfläche (10o, 10u) der inneren Schicht (10) die dritte Schicht bildet,
wobei die Akustik-Mehrschichtplatte damit nur auf einer Seite perforiert ist und über ihre nicht perforierte Oberfläche direkt an einer Decke oder Wand angeklebt werden kann.

2. Akustik-Mehrschichtplatte nach Anspruch 1, wobei die perforierte Deckschicht (14, 16) in Form eines vorgefertigten Halbzeugs aus Metall, Holz oder Kunststoff vorliegt.

3. Akustik-Mehrschichtplatte nach Anspruch 1, wobei die perforierte Deckschicht aus einer ausgehärteten monolithischen Masse eine Deckschicht auf Basis von Kunstharz, Kunststoff oder Metall ist.

4. Akustik-Mehrschichtplatte nach Anspruch 1, mit der perforierten Deckschicht in einer Schichtstärke von 0,2 bis 1,5 mm.

5. Akustik-Mehrschichtplatte nach Anspruch 1, mit Perforationsöffnungen mit einer maximalen Öffnungsweite zwischen 0,2 und 1,5 mm.

6. Akustik-Mehrschichtplatte nach Anspruch 1, mit einer Gesamtdicke, senkrecht zu ihren Hauptoberflächen, zwischen 25 und 60 mm.

## Claims

1. Acoustic multilayer board with the following structure of at least three layers comprising:
1.1 an inner layer (10) based on irregularly distributed wood wool chips (12), which are joined at least in sections with an inorganic binder,
1.2 a perforated covering layer (14, 16) on a main surface (10o, 10u) of the inner layer (10), wherein
the covering layer (14, 16) is present in the form of a prefabricated semi-finished product, which is glued onto a corresponding main surface (10o, 10u) of the inner layer (10), or wherein
the covering layer (14, 16) is composed of a cured monolithic compound, wherein
1.3 on at least 4/5 of its surface area the covering layer (14, 16) is provided with a perforation (18), with 5 to 25 perforation openings per cm² area, and
1.4 a mineral fibre coating, a gypsum plaster board or a glass fibre mat, which forms the third layer on the other main surface (10o, 10u) of the inner layer (10), wherein the acoustic multilayer board is thus perforated on only one side and can be glued directly to a ceiling or wall on its non-perforated surface.

2. Acoustic multilayer board according to claim 1, wherein the perforated covering layer (14, 16) is present in the form of a prefabricated semi-finished product made of metal, wood or plastic.

3. Acoustic multilayer board according to claim 1, wherein the perforated covering layer made of a cured monolithic compound is a covering layer based on synthetic resin, plastic or metal.

4. Acoustic multilayer board according to claim 1, with the perforated covering layer in a layer thickness of 0.2 to 1.5 mm.

5. Acoustic multilayer board according to claim 1, with perforation openings with a maximum opening width of between 0.2 and 1.5 mm.

6. Acoustic multilayer board according to claim 1, with a total thickness perpendicular to its main surfaces of between 25 and 60 mm.

## Revendications

1. Plaque multicouche acoustique avec la structure suivante, composée au moins de trois couches :
1.1 une couche intérieure (10) à base de copeaux de laine de bois répartis irrégulièrement (12), qui sont liés, au moins en partie, avec un liant inorganique,
1.2 une couche de protection perforée (14, 16) sur une surface principale (10o, 10u) de la couche intérieure (10), dans laquelle
la couche de protection (14, 16) se présente sous la forme d'un élément semi-fini préfabriqué, qui est collé sur une surface principale (10o, 10u) correspondante de la couche intérieure (10), ou dans laquelle
la couche de protection (14, 16) se compose d'une masse monolithique durcie, dans laquelle
1.3 la couche de protection (14, 16) est pourvue d'une perforation (18) sur au moins 4/5 de sa surface, avec 5 à 25 ouvertures par cm² de surface, et
1.4 une couche de fibres minérale, une plaque de plâtre ou un mat de fibres de verre, qui constitue la troisième couche sur l'autre surface principale (10o, 10u) de la couche intérieure (10),
dans laquelle la plaque multicouche acoustique n'est ainsi perforée que sur un seul côté et peut être directement collée à un plafond ou à un mur par sa surface non perforée.

2. Plaque multicouche acoustique selon la revendication 1, dans laquelle la couche de protection perforée (14, 16) se présente sous la forme d'un élément semi-fini préfabriqué en métal, bois ou matière plastique.

3. Plaque multicouche acoustique selon la revendication 1, dans laquelle la couche de protection perforée réalisée dans une masse monolithique durcie est une couche de protection à base de résine synthétique, de matière plastique ou de métal.

4. Plaque multicouche acoustique selon la revendication 1, avec la couche de protection perforée d'une épaisseur de 0,2 à 1,5 mm.

5. Plaque multicouche acoustique selon la revendication 1, avec des ouvertures de perforation présentant une largeur d'ouverture maximale comprise entre 0,2 et 1,5 mm.

6. Plaque multicouche acoustique selon la revendication 1 avec une épaisseur totale, mesurée perpendiculairement à ses surfaces principales, comprise entre 25 et 60 mm.
